# FASCICULE DE BREVET EUROPEEN

(11) **EP 0 880 901 B1**
(45) Date de publication et mention de la délivrance du brevet: **10.03.2004**
(21) Numéro de dépôt: 97401164.5
(22) Date de dépôt: 27.05.1997
(51) Int. Cl.: A23C 19/09, A23C 19/08

(54) **Procédé de fabrication de produits fromagers par traitement d'un fromage de départ**
Verfahren zur Herstellung von Käseprodukten durch Behandlung von Käseausgangsmasse
Process for preparing cheese products by treatment of a starting cheese

(43) Date de publication de la demande: 02.12.1998
(73) Titulaire: FROMAGERIES BEL, 75008 Paris (FR)
(72) Inventeur: Begueria, Corinne, 41100 Vendome (FR)
(74) Mandataire: Bernasconi, Jean Raymond

(56) Documents cités:
- EP-A- 0 535 728
- WO-A-95/19699
- DE-C- 489 408
- FR-A- 2 383 610
- GB-A- 536 921
- GB-A- 2 066 837
- US-A- 1 522 383
- US-A- 2 009 238
- US-A- 5 104 675
- US-A- 5 244 687
- US-A- 5 614 244

## Description

L'invention conceme un procédé de fabrication de nouveaux produits fromagers par traitement d'une matière de départ consistant en un fromage et les produits obtenus par ce procédé.

On connaît déjà des fromages obtenus par traitement de produits fromagers issus du traitement de lait; on peut citer comme famille la plus représentative de cette catégorie de produits celle des fromages fondus; ces derniers sont obtenus par broyage de toute catégorie de fromages issus du lait, plus spécifiquement des fromages à pâte pressée, mélange avec d'autres matières premières laitières (poudre de lait entier, partiellement ou totalement écrémée, beurre, matière grasse laitière anhydre, babeurre, concentrés protéiques, etc...) en quantité variable selon le type de produits finis que l'on veut obtenir, incorporation audit mélange de sels de fonte choisis dans la famille des polyphosphates, orthophosphates ou citrates de sodium, potassium, calcium, puis traitement thermique du mélange à des températures comprises entre 80 et 140°C pendant un temps allant de quelques secondes à plusieurs minutes, dépendant de la température. Pour la réalisation de ce procédé les sels de fonte sont utilisés pour leurs propriétés chélatantes du calcium, ce qui entraîne une solubilisation des protéines facilitant l'émulsification par un effet stabilisant sur le pH.

Toutefois l'inconvénient majeur d'un tel procédé est qu'il conduit à un type de fromages qui, malgré une valeur nutritionnelle équivalente aux produits mis en oeuvre et une possibilité de présentations variées (portions, tranches, blocs, etc) et une excellente conservation, supérieure à celle du produit initial, diffèrent totalement du produit d'origine aussi bien par leur texture que par leur goût.

Ainsi l'analyse du taux de peptisation traduisant un changement de structure des protéines au cours du procédé, mesuré par le taux d'azote soluble non sédimentable lié à la libération des peptides solubles au cours du traitement de fabrication indique une valeur comprise entre 40 et 50, pour des fromages obtenus par des traitements thermiques supérieurs à 100°C contre des valeurs proches de 0, pour des fromages n'ayant pas subi de traitement.

Le procédé de fonte impliqué déstructure en outre fortement la matière première mise en oeuvre ce qui explique la différence de propriétés texturales et organoleptiques entre le produit d'origine et le produit final.

Afin d'obtenir des produits finaux dont les caractéristiques gustatives et texturales se rapprochent du produit d'origine tout en offrant des présentations variées et une conservation améliorée, certains auteurs ont proposé des procédés moins déstructurants. On peut ainsi citer la demande de brevet WO 95/19699 qui décrit un procédé de reconstitution de fromages à pâte pressée cuite, déclassées ou en morceaux, le procédé décrit consistant à diviser la matière première en morceaux de forme régulière, à soumettre le fromage divisé sans adjonction d'eau ni aucun autre ingrédient à des opérations de malaxage et de cisaillement contrôlés et à une cuisson à une température comprise entre 70 et 80°C de préférence dans un appareil de type cuiseur-extrudeur. Selon les auteurs de l'invention, le procédé n'entraînerait aucune dégradation des protéines lors du traitement et le produit fini présenterait des caractéristiques biochimiques, physico-chimiques, et organoleptiques comparables à celles de la matière première. Toutefois, les auteurs de la précédente invention ont établi que les températures utilisées ne sont pas, contrairement aux indications du document, sans conséquence sur l'état des protéines et la perte aromatique. En outre des essais réalisés par la demanderesse mettant en oeuvre ledit procédé ont montré que les produits obtenus présentaient une exsudation de matière grasse entraînant des présentations de produits peu attractives pour le consommateur. Cette exsudation s'explique par une mauvaise émulsification et par conséquent une mauvaise liaison de la matière grasse au réseau protéique.

En outre le procédé mis en oeuvre est appliqué uniquement à des fromages à pâte pressée cuite, soit des produits à extrait sec élevé, et, nécessite pour sa mise en oeuvre la division du fromage d'origine en morceaux de forme régulière ainsi que l'utilisation d'un appareil de cuisson-extrusion adapté.

Le brevet EP 0 260 194 se propose de résoudre les difficultés de mauvaise tenue d'une émulsion de ce type par incorporation d'un agent émulsifiant et décrit un procédé comportant une première étape d'addition de protéines au fromage et une seconde étape de traitement mécanique de mise en forme, le fromage de départ étant sélectionné parmi les fromages affinés ayant au moins 50 % de matières sèches et plus spécialement parmi les fromages à pâte pressée cuite ou non, auxquels on rajoute à raison de 5 à 10 % des protéines choisies parmi les protéines ayant une fonction émulsifiante à une température inférieure à leur température de coagulation, ces deux matières premières étant mélangées afin de permettre un traitement mécanique de mise en forme ultérieure du fromage et l'obtention d'un fromage ayant une texture, un goût et une couleur substantiellement identiques à celles du fromage de départ ainsi qu'une forme spécifique résultant du traitement mécanique employé.

Dans ce procédé, les protéines sont additionnées au fromage à traiter lorsque celui-ci est à une température comprise entre 40 et 80°C, de préférence 80°C, et le mélange est traité mécaniquement à une température comprise entre 40 et 50°C. L'agent émulsifiant utilisé est choisi de préférence dans la famille des séroprotéines, ces dernières étant sélectionnées pour leur propriétés émulsifiantes à l'exclusion de toutes les autres propriétés. Le procédé décrit dans le brevet EP 0 260 194 permet donc l'obtention d'une émulsion de meilleure qualité que celle du brevet WO 95/19 699 mais présente l'inconvénient d'être limité à des fromages ayant un extrait sec supérieur à 50 %. En outre, l'adjonction au fromage à traiter de séroprotéines à un taux compris entre 5 et 10 % n'est pas sans incidence sur la présence de faux goûts. De plus, le spectre d'action des séroprotéines n'est pas suffisant à la réalisation d'une émulsion complète éliminant toute exsudation ultérieure de matière grasse à la surface du produit. Ce défaut se retrouve dans le goût des produits obtenus (produit gras en bouche, très pâteux) ce qui peut être acceptable pour des produits composites obtenus par extrusion de la pâte fromagère et d'un fourrage fromager ou de nature différente, mais devient rédhibitoire pour un produit essentiellement à base de fromage.

Le but de l'invention est de proposer un nouveau procédé de fabrication de produits fromagers obtenus par traitement de fromages issus du traitement du lait qui ne possèdent pas les défauts des produits fabriqués se-Ion les technologies décrites et présentent des caractéristiques organoleptiques et texturales proches des produits d'origine.

Le procédé devra pour cela limiter au maximum les modifications des protéines et permettre une bonne réémulsification de la matière grasse et du réseau protéique afin d'éviter toute exudation de matière grasse du produit fini, de sorte que l'on retrouve dans le produit fini les caractéristiques gustatives et texturales les plus proches possible du produit d'origine.

A cet effet, l'objet de l'invention est un procédé de fabrication d'un produit fromager par traitement d'une matière de départ consistant en un fromage, comprenant les étapes suivantes :
a) traitement thermique et mécanique de type pétrissage du fromage de départ, après fractionnement en morceaux, à une température inférieure à 60°C, pour obtenir une déstructuration limitée du réseau protéique du fromage de départ,
b) refroidissement du mélange de l'étape a) à une température inférieure à 50°C pour amorcer la restructuration du réseau protéique et la constitution d'une émulsion stable des matières grasses avec les autres constituants du fromage de départ ;
c) si nécessaire, traitement mécanique de la pâte obtenue en b) dans un appareillage à vis sans fin pour compléter la restructuration du réseau protéique et stabiliser l'émulsion, et
d) mise en forme de la pâte obtenue à l'étape c),
dans lequel les étapes a) et b) sont réalisées par addition au produit fromager de départ d'un mélange comprenant un agent émulsifiant et chélatant du calcium et de l'acide sorbique ou un sel de celui-ci.

Par sel au sens de la présente invention, on entend un sel à usage alimentaire notamment les sels de sodium, calcium et potassium.

Les étapes a) et b) de déstructuration, amorce de la restructuration et constitution d'une émulsion stable du réseau protéique et des matières grasses sont effectuées avantageusement par la mise en oeuvre combinée de traitements mécanique de type pétrissage (ou brassage), et thermique modérés de la matière fromagère de départ en présence du nouvel agent structurant défini ci-dessus consistant en la combinaison d'un agent émulsifiant et chélatant du calcium (A) et d'acide sorbique ou d'un sel de celui-ci (B).

L'agent émulsifiant et chélatant du calcium (A) peut être tout agent de ce type traditionnellement utilisé dans l'industrie laitière, tel que l'acide citrique ou ses sels, les phosphates notamment les orthophosphates et polyphosphates, de sodium, potassium, calcium.

Ces agents sont largement utilisés en technologie de fabrication de fromages fondus pour leur action déstructurante du réseau protéique, par complexation du calcium, et émulsifiante mais à des doses et dans des conditions de traitement thermique assurant une forte déstructuration du réseau protéique.

Conformément à l'invention, on ne met en oeuvre qu'une déstructuration très partielle du réseau protéique du fromage à traiter ; ces agents ne sont donc pas utilisés dans les conditions d'activité habituelles. Par ailleurs, la réalisation d'une émulsion et d'une restructuration parfaites est obtenue par l'addition d'un composé qui va compléter le rôle restructurant des citrates et/ou des phosphates.

De manière surprenante, la Demanderesse a mis en évidence le rôle synergique des agents émulsifiants et chélatants conventionnels avec l'acide sorbique ou ses sels, sur la restructuration du produit et la stabilité de l'émulsion.

Des essais comparatifs employant isolément soit un agent émulsifiant et chélatant du calcium, du type décrit ci-dessus, soit l'acide sorbique ou un sorbate ont révélé, lors d'analyses sensorielles, des défauts de texture du produit entraînés par une réorganisation incomplète du réseau. Outre que le produit final obtenu par utilisation des composés (A) et (B) de l'invention n'entraîne aucun changement de la structure des protéines, (le taux d'azote soluble non sédimentable du produit final étant équivalent à celui du produit de départ), le produit final présente une cohésion tout à fait remarquable et une texture voisine si ce n'est identique à la matière première de départ.

Avantageusement, le rapport A/B est compris entre 3/1 et 9/1, la quantité de A étant de préférence 0,15 à 1,8 % en poids, et celle de B de 0,05 à 0,2 % en poids, par rapport au poids total du mélange.

La fonction de l'agent structurant composé de A et B est d'assurer dans un premier temps une déstructuration limitée du réseau protéique par complexation d'une partie seulement du calcium, et, dans un deuxième temps, une restructuration du réseau protéique en même temps qu'une bonne émulsification de la matière grasse de façon à éviter une exsudation de celle-ci.

Des combinaisons particulièrement avantageuses de A et B sont les associations citrate de sodium/acide sorbique ou polyphosphates de sodium/acide sorbique, celles-ci présentant en outre l'avantage d'avoir une activité bactériostatique qui permet d'améliorer la conservation du produit final.

Si l'acide citrique ou les phosphates et polyphosphates sont connus et utilisés en technologie alimentaire en tant qu'acidulants, émulsifiants, chélatants des métaux dans les confitures, gelées, pâtes de fruits et divers aliments nouveaux à humidité intermédiaire, tels que les fromages fondus, il n'en est pas de même pour l'acide sorbique ou les sorbates qui sont utilisés essentiellement pour leur activité antimicrobienne, notamment fongistatique ; ils sont d'ailleurs couramment utilisés à cet effet dans les émulsions grasses (margarines, fromages), les produits au vinaigre, les fruits séchés, les jus de fruits et diverses autres préparations. L'acide sorbique est plus actif à bas pH mais son efficacité est peut être moins influencée par le pH que celles des autres conservateurs acides à l'exception de l'acide propionique. L'action antimicrobienne s'explique par une inhibition exercée sur des enzymes à groupes sulfhydryles, notamment les déshydrogénases.

La présente invention décrit donc pour la première fois l'utilisation d'acide sorbique ou de ses sels pour renforcer le rôle émulsifiant et structurant d'un agent utilisé traditionnellement à cet effet dans l'industrie alimentaire, notamment fromagère, du fait des conditions de pH d'utilisation.

Pour la réalisation de l'invention, on peut partir de fromages de toute catégorie issus du lait selon les technologies traditionnellement employées. Les fromages sont obtenus par les étapes successives suivantes :
(1) prise en masse ou coagulation du lait standardisé ou d'un concentré laitier par action d'un agent coagulant,
(2) mise en forme du caillé égoutté ou non dans des moules,
(3) égouttage spontané ou par action de la pression permettant d'obtenir l'extrait sec désiré du produit final,
(4) salage ou saumurage, qui confère à la pâte la teneur en sel souhaitée et permet la formation d'une croûte superficielle, et
(5) ressuyage. Pour les fromages à croûte naturelle, ces étapes sont suivies d'un
(6) ensemencement de la surface du fromage en une flore superficielle adaptée aux types de fromages que l'on veut obtenir, et que l'on met à développer au cours d'une période d'affinage plus ou moins longue au cours de laquelle on procède à des soins favorisant la croissance de la flore.

Tous les types de fromages obtenus selon le procédé ci-dessus décrit sont adaptés à la réalisation de l'invention ; toutefois ceux possédant un extrait sec supérieur à 40 % en poids, sont préférés.

Préalablement à la déstructuration-restructuration du fromage de départ, celui-ci est de préférence divisé ou découpé en morceaux, brins, ou mis sous forme de semoule.

Avantageusement, les morceaux ont un volume égal ou inférieur à 125 cm³. Aussi, le fromage de départ peut être découpé en cubes dont la longueur des arêtes et égale ou inférieure à 5 cm, par exemple à l'aide d'un découpeur habituel du commerce.

Lorsque le fromage de départ est râpé, on utilise toute râpe industrielle connue à cet effet.

On ajoute au fromage l'agent structurant selon l'invention, préférentiellement après mise en solution de ce dernier dans l'eau. L'agent structurant est employé de préférence à une dose n'excédant pas 2 % du poids total du fromage.

On peut également pour les besoins de l'invention ajouter de l'eau au fromage pour obtenir un extrait sec final inférieur à l'extrait sec du fromage de départ. Dans tous les cas la proportion d'eau est limitée à 30 % en poids du fromage de départ, mais est de préférence inférieure à 10 % en poids, notamment dans le cas où on souhaite obtenir un produit final ayant les caractéristiques organoleptiques et texturales proches du produit d'origine.

L'étape a) est réalisée avantageusement, en soumettant ensuite le fromage de départ en morceaux, brins ou semoule après addition de l'agent structurant défini ci-dessus et le cas échéant après addition d'eau, à un traitement thermique doux, consistant à chauffer le produit de départ à une température comprise entre 30 et 60°C pendant une durée comprise entre 30 s et 2 mn tout en brassant la pâte fromagère afin de réaliser un mélange homogène.

Les traitements de l'étape a) sont effectués dans tout appareil approprié. On peut citer les systèmes à injection de vapeur; tels les "cutters" employés en charcuterie ou en technologie de fromage fondu et les pétrins utilisés en boulangerie.

La vitesse de brassage est avantageusement comprise entre 100 et 600 t/min, de préférence 100 et 300 t/min, pour des appareillages utilisés traditionnellement dans l'industrie fromagère. Ainsi, la vitesse de brassage est de préférence comprise entre 100 et 150 t/min pour l'hélice d'un appareillage de type "pétrin" et 250 et 300 t/min pour le couteau d'un appareillage de type "cutter".

L'étape b) est avantageusement conduite en refroidissant la pâte obtenue à une température comprise entre 25-50°C pendant une durée de 1 à 3 mn. La température de refroidissement est dépendante de la température de chauffage mais n'est pas supérieure à 50°C.

Le traitement mécanique de l'étape b) est du même type que celui de l'étape a) bien que les conditions puissent varier dans la gamme spécifiée ci-dessus, les étapes a) et b) ont lieu avantageusement dans le même appareillage.

Avantageusement, les étapes a) et b) sont menées sous vide partiel de façon à éviter les pertes aromatiques et réduire l'oxydation du produit ; le vide est avantageusement compris entre 0,4 et 0,7 bar.

La pâte obtenue peut, à l'issue de l'étape b), être transférée dans un dispositif à vis sans fin où elle subit un traitement mécanique simple destinée à compléter la restructuration du réseau protéique et stabiliser l'émulsion. Le temps de séjour dans le dispositif à vis sans fin est avantageusement compris entre 30 secondes et 5 minutes. Par traitement mécanique simple, on entend un traitement de poussée sans autre effet supplémentaire, tel que thermique ou de pression, comme c'est le cas pour l'extrusion. A l'extrémité de sortie de la vis sans fin est positionnée une formatrice.

Les produits sortant de ce dispositif sont sous des formes variables (billes, formes cylindriques, ovoïdes, etc) selon le profil de la formatrice placée à l'extrémité de sortie de la vis sans fin ; ils sont ensuite refroidis et emballés.

Les produits sortant du dispositif à vis sans fin peuvent également, à la sortie de la formatrice, être mis en moules pour conférer au produit final la forme définitive souhaitée. De façon avantageuse, on peut faire subir au produit placé dans le moule une légère opération de pressage pour améliorer le formage.

Le produit final est alors conditionné dans tout emballage approprié, enrobé avec des cires de fromagerie ou des substituts de celles-ci tels que des acétoglycérides ou des enrobages comestibles ; il peut être poussé également à la sortie de l'extrudeuse dans des coques plastiques par passage dans une mouleuse bi-coque.

Les produits obtenus sont de toute forme et de tout grammage ; avantageusement ce dernier est compris entre 5 et 500 g.

Dans un premier mode de réalisation de l'invention, le procédé décrit ci-dessus est conduit sans addition d'autres produits que l'agent chélatant du calcium, l'acide sorbique ou un sel de celui-ci et éventuellement de l'eau, en une quantité inférieure à 10 % en poids, et sans étape de traitement supplémentaire, et les produits obtenus ont une texture et des qualités organoleptiques proches du produit d'origine. On voit donc tout l'intérêt d'un tel procédé pour la fabrication de fromages de petit format ayant des goûts proches de fromages de très gros formats tels que les fromages à pâte pressée cuite, le cheddar et produits similaires, le ®Leerdammer, les tomes issus de lait de vache, brebis ou chèvre ou de fromages à pâte molle.

Dans un second mode de réalisation de l'invention, on ajoute au fromage de départ l'agent structurant selon l'invention en même temps que des éléments alimentaires figurés d'origine végétale ou animale dans une proportion de 1 à 10 % du poids de fromage ; on ajoute éventuellement de l'eau à un taux n'excédant pas 30 %, de préférence inférieur à 10 % en poids et on traite le mélange obtenu comme décrit ci-dessus.

En variante, les éléments figurés sont ajoutés après l'étape b).

Cette alternative est intéressante dans la mesure où elle permet de proposer au consommateur une gamme de produits dont les caractéristiques organoleptiques allient celles de fromages traditionnels à goût typé (goût fruité des pâtes pressées cuites par exemple) avec celui des éléments figurés (noix, noisette, pistache, arachides, morceaux de jambon, extraits végétaux, etc) en mettant en oeuvre un procédé simple et rapide.

Les produits obtenus selon ce mode de réalisation peuvent être de tout grammage et de tout format.

Dans un troisième mode de réalisation de l'invention, le mélange obtenu à partir du fromage de départ éventuellement après division en morceaux ou râpage, addition de l'agent structurant de l'invention et éventuellement addition d'eau est à l'issu de l'étape b) soumis à un traitement de foisonnement par incorporation d'azote ou tout autre gaz compatible et approprié à l'aide d'un appareil de foisonnement usuel. Dans ce cas, la pâte ne subit pas l'étape c) de traitement mécanique.

La pâte obtenue est ensuite conditionnée après formage dans un moule ou déposée directement dans l'emballage définitif. On obtient ainsi tout une gamme de produits nouveaux alliant les caractéristiques gustatives du fromage de départ à une texture aérée.

Quelque soit l'alternative utilisée, on obtient aisément par le procédé de l'invention une variété de produits de tout grammage et de toute forme qui peuvent être conditionnés dans tout mode d'emballage (sachets, papier, films plastiques aluminisés, coques plastiques) ou d'enrobage (cires de fromagerie ou succédanés).

L'invention a également pour objet l'utilisation d'acide sorbique ou d'un sel de celui-ci à usage alimentaire pour renforcer le rôle émulsifiant et structurant d'un agent émulsifiant et chélatant du calcium dans une composition alimentaire, notamment à base de fromage.

L'agent émulsifiant et chélatant du calcium, est de préférence l'acide citrique, l'acide phosphorique, l'acide polyphosphorique ou leurs sels.

L'invention est illustrée par les exemples ci-après donnés à titre illustratif et non limitatif. Les pourcentages sont en poids.

Les poids des différents ingrédients sont indiqués en pourcentage par rapport au poids total de la pâte fromagère, sauf indication contraire.

### EXEMPLES :

### Exemple 1 : Fabrication d'un produit à base d'une pâte pressée cuite (Emmenthal)

Le fromage est râpé (1,6 x 1,6 mm x 100 mm) et introduit à froid, dans une enceinte de pétrissage et de traitement thermique sous vide (cuter), on ajoute du citrate de Na (à raison de 4,5 % en poids), et de l'acide sorbique (à raison de 0,065 % en poids), puis 2 % en poids d'eau.

Le mélange est alors salé: 0,8 % (poids/poids) de NaCl.

Il subit :
- un brassage sous vide partiel, durant 2 min., à une température de 5°C sous agitation mécanique,
- un traitement thermique sous vide partiel (0,8 bar), par injection de vapeur directe, durant 1 min., sous agitation mécanique, pour atteindre une température de 45°C,
- un chambrage, sous vide partiel sous agitation mécanique, à la température atteinte, pendant 20 secondes,
- un refroidissement sous agitation mécanique réduite jusqu'à une température de 40°C sous vide partiel (0,7 bar) pendant 1 min.

Le vide est interrompu et la masse obtenue selon les étapes précédentes, est vidangée dans un appareil à double vis, où se poursuit la restructuration du mélange, par un travail mécanique de poussée.

Cet appareil complété à l'extrémité de sortie par une formatrice délivre des mini-pièces de 50 g, pré-formées sous forme "ovoïde".

La mise en forme définitive est effectuée par un pressage instantané en moules.

Les produits ainsi obtenus, subissent un refroidissement rapide dans une enceinte de réfrigération basse température (2°C).

Les produits sont ensuite démoulés à froid, par enduction à l'aide d'une cire d'enrobage ou d'un enrobage comestible.

Les produits ainsi préparés, reçoivent un sur-emballage.

Les produits sont regroupés.

### Exemple 2 : Obtention de mini produits à base de pâte molle

La matière première (pâte molle à bas extrait sec, 40-50 %) subit à froid une réduction de taille, sous forme de cossettes (3x3x3cm).

Les cossettes ainsi préparées sont introduites à froid, dans une enceinte de pétrissage et de traitement thermique sous vide (cutter).

On ajoute l'agent structurant composé de citrate de Na (à raison de 0,22 % en poids) et d'acide sorbique (à raison de 0,09 % en poids), puis de l'eau à raison de 0,45 % en poids.

Le mélange ainsi préparé est alors salé avec 0,3 % (poids/poids) de NaCl, puis il subit :
- un brassage sous vide partiel (0,7 bar), pendant 1 min., à une température de 10°C, sous agitation mécanique réduite (100 t/min.) ;
- un traitement thermique sous vide partiel (0,7 bar) pendant 1 min., sous agitation mécanique réduite, pour atteindre une température de 45°C ;
- un chambrage, sous vide partiel (0,7 bar), sous agitation mécanique réduite, à cette température, pendant 10 secondes ;
- un refroidissement sous agitation mécanique réduite, jusqu'à une température de 40°C, sous vide partiel (0,7 bar) pendant 2 min.

Le vide est interrompu.

La masse obtenue est transférée dans un système de poussée à vis dans fin poursuivant le travail de texturation.

La masse ainsi travaillée, texturée est alimentée dans une mouleuse bicoque pour mise en forme et conditionnement en bicoques des produits de 25 g.

Les produits ainsi conditionnés subissent un refroidissement rapide en tunnel de réfrigération dynamique, à la température de 4°C.

Les produits sont enfin regroupés en filet de 5 unités pour commercialisation.

### Exemple 3 : Obtention de mousse de fromage à base de mimolette

La Mimolette est réduite en "semoule" (grains de 0,2 mm de diamètre).

La matière première ainsi préparée, est introduite à froid dans une enceinte de pétrissage et traitement sous vide (pétrin). On ajoute : du polyphosphate de Na (à raison de 1,22 % en poids) et de l'acide sorbique (à raison de 1,4 % en poids), puis de l'eau à raison de 1,7 % par rapport à l'extrait sec de la matière première.

Le mélange obtenu est alors salé à 0,2 % (poids/poids) de NaCl.

Le mélange ainsi préparé subit :
- un brassage sous vide partiel (0,6 bar), durant 1 min., à une température de 15°C, sous agitation mécanique;
- un traitement thermique sous vide partiel (0,6 bar), par injection directe de vapeur, de 2 min., sous agitation mécanique, pour atteindre une température de 55°C;
- un chambrage, sous vide partiel (0,6 bar), sous agitation mécanique, à la température atteinte, pendant 20 s. ;
- un refroidissement sous agitation mécanique réduite, sous vide partiel (0,6 bar) jusqu'à une température de 50°C, pendant 40 s.

Le vide est interrompu.

La masse obtenue est vidangée et alimentée vers un foisonneur de type ® Mondomix.

La masse foisonnée est dosée en barquettes de 100 g, qui sont thermoscellées sous atmosphère contrôlée.

Les produits ainsi conditionnés, subissent un refroidissement rapide dans un enceinte à réfrigération statique à basse température (4°C).

### Exemple 4 : Obtention de barre fromagère aux fruits secs

La matière première composée de Brie subit à froid, une réduction de taille, sous forme de cossettes (3x3x3cm).

La matière première ainsi préparée est introduite à froid dans une enceinte de pétrissage et de traitement thermique sous vide partiel.

On ajoute des polyphosphates de Na (à raison de 0,26 % en poids) et de l'acide sorbique (à raison de 0,1 % en poids), et de l'eau (à raison de 2,6 % en poids).

Le mélange ainsi obtenu est alors salé avec 0,2 % (poids/poids) de NaCl.

Le mélange subit ensuite :
- un brassage sous vide partiel (0,5 bar), durant 30 secondes à une température de 5°C, sous agitation mécanique;
- un traitement thermique sous vide partiel (0,5 bar), par injection de vapeur directe ou en double enveloppe, selon la texture recherchée, de 40 secondes, sous agitation mécanique, pour atteindre une température de 40°C;
- un chambrage, sous vide partiel (0,5 bar), sous agitation mécanique, à cette température, pendant 20 secondes.

Il est refroidi sous agitation mécanique réduite, jusqu'à une température de 35°C, sous vide partiel (0,6 bar) pendant 2 min.

Le vide est interrompu.

A la masse ainsi traitée, sont alors ajoutés des éléments figurés comprenant un mélange de noisettes et d'amandes grillées et d'abricots secs.

L'ensemble obtenu est mélangé par agitation mécanique lente ménagée (environ 35 tours/min.) durant 40 secondes pour obtenir un mélange homogène.

La masse est vidangée et mise en forme de barres avec une doseuse/extrudeuse (poids 50 g).

Les barres ainsi obtenues, subissent un refroidissement rapide dans un tunnel de réfrigération dynamique à basse température (4°C).

Les produits sont conditionnés individuellement à froid, en "flow-pack" sous gaz neutre et thermoscellés.

## Revendications

1. Procédé de fabrication d'un produit fromager par traitement d'une matière de départ consistant en un fromage, comprenant les étapes suivantes :
a) traitement thermique et mécanique de type pétrissage du fromage de départ, après fractionnement en morceaux, à une température inférieure à 60°C, pour obtenir une déstructuration limitée du réseau protéique du fromage de départ,
b) refroidissement du mélange de l'étape a) à une température inférieure à 50°C pour amorcer la restructuration du réseau protéique et la constitution d'une émulsion stable des matières grasses avec les autres constituants du fromage de départ ;
c) si nécessaire, traitement mécanique de la pâte obtenue en b) dans un appareillage à vis sans fin pour compléter la restructuration du réseau protéique et stabiliser l'émulsion, et
d) mise en forme de la pâte obtenue à l'étape c),
dans lequel les étapes a) et b) sont réalisées par addition au produit fromager de départ d'un mélange comprenant un agent émulsifiant et chélatant du calcium et de l'acide sorbique ou un sel de celui-ci.

2. Procédé selon la revendication 1, dans lequel le rapport de l'agent émulsifiant et chélatant du calcium à l'acide sorbique ou ses sels est compris entre 3/1 et 9/1.

3. Procédé selon la revendication 1 ou la revendication 2, dans lequel la quantité d'agent émulsifiant est de 0,15 à 1,8 % en poids par rapport au poids total du mélange obtenu en b).

4. Procédé selon l'une quelconque des revendications 1 à 3, dans lequel la quantité d'acide sorbique ou de ses sels est de 0,05 à 0,2 % en poids par rapport au poids total du mélange obtenu en b).

5. Procédé selon l'une quelconque des revendications précédentes, dans lequel le fromage est divisé en morceaux, brins ou semoule avant le traitement thermique de l'étape a).

6. Procédé selon la revendication 1, dans lequel les morceaux ou brins de fromage ont un volume non supérieur à 125 cm³.

7. Procédé selon l'une quelconque des revendications précédentes, dans lequel le fromage de départ a un extrait sec supérieur à 40 % en poids.

8. Procédé selon l'une quelconque des revendications précédentes, dans lequel l'étape a) est réalisée par traitement thermique et brassage du mélange constitué par le fromage de départ, l'agent émulsifiant et chélatant du calcium et l'acide sorbique ou un sel de celui-ci, à une température comprise entre 30°C et 60°C pendant une durée comprise entre 30 s et 2 min.

9. Procédé selon l'une quelconque des revendications précédentes, dans lequel l'étape b) est réalisée par refroidissement du mélange obtenu à l'issue de l'étape a), à une température comprise entre 25°C et 50°C, pendant une durée comprise entre 1 et 3 min.

10. Procédé selon la revendication 8 ou 9, dans lequel les étapes a) et b) sont réalisées sous un vide partiel compris entre 0,4 et 0,7 bar.

11. Procédé selon l'une quelconque des revendications précédentes, dans lequel on ajoute au mélange constitué par le fromage de départ, l'agent émulsifiant et chélatant du calcium et l'acide sorbique ou un sel de celui-ci, une quantité d'eau n'excédant pas 30 % en poids, de préférence n'excédant pas 10 % en poids, par rapport au poids total du mélange obtenu.

12. Procédé de fabrication d'un produit fromager selon l'une quelconque des revendications précédentes, dans lequel on ajoute à l'étape a), b) ou c) des éléments alimentaires figurés en une quantité comprise entre 1 et 10% en poids.

13. Procédé de fabrication d'un produit fromager selon l'une des revendications 1 à 11, dans lequel on réalise un foisonnement de la pâte fromagère obtenue à l'issue de l'étape b), l'étape c) étant omise.

14. Produit fromager obtenu a partir d'une matière de départ consistant en un fromage issu du lait selon les technologies traditionnelles et optionellement des éléments alimentaires figurés et présentant les caractéristiques organoleptiques et texturales les plus proches possible dudit fromage de départ, et susceptible d'être obtenu par le procédé selon l'une quelconque des revendications 1 à 12.

15. Produit fromager selon la revendication 14 obtenu a partir d'une matière de départ consistant en un fromage issu du lait selon les technologies traditionnelles et optionellement des éléments alimentaires figurés, présentant les caractéristiques organoleptiques et texturales les plus proches possible dudit fromage de départ, et desdits éléments alimentaires figurés, et susceptible d'être obtenu par le procédé selon la revendication 12.

16. Produit fromager obtenu à partir d'une matière de départ consistant en un fromage issu du lait selon les technologies traditionnelles, présentant une texture foisonnée, et susceptible d'être obtenu par le procédé selon la revendication 13.

17. Utilisation d'acide sorbique ou d'un sel de celui-ci à usage alimentaire pour renforcer le rôle émulsifiant et restructurant du réseau protéique d'un agent émulsifiant et chélatant du calcium dans une composition alimentaire, notamment à base de fromage.

18. Utilisation selon la revendication 17, dans laquelle l'agent émulsifiant et chélatant du calcium, est de préférence l'acide citrique, l'acide phosphorique, l'acide polyphosphorique ou un de leurs sels.

19. Utilisation selon la revendication 17 ou 18 dans laquelle l'acide sorbique est utilisé en mélange avec un agent structurant alimentaire comprenant un mélange d'un agent émulsifiant et chélatant du calcium et d'acide sorbique ou d'un de ses sels, et dans laquelle le rapport de l'agent émulsifiant et chélatant du calcium à l'acide sorbique ou son sel est compris entre 3/1 et 9/1.

## Claims

1. Process for the manufacture of a cheese product by treating a starting material consisting of a cheese, comprising the following steps:
a) heat and mechanical treatment, of the kneading type, of the starting cheese, after its fractionation into pieces, at a temperature of less than 60°C, in order to obtain limited destructuring of the protein network of the starting cheese,
b) cooling the mixture in step a) to a temperature of less than 50°C in order to initiate the restructuring of the protein network and the constitution of a stable emulsion of fat with other constituents of the starting cheese;
c) if necessary, mechanical treatment of the paste obtained in b) in an endless screw apparatus in order to complete the restructuring of the protein network and to stabilize the emulsion, and
d) shaping the paste obtained in step c),
in which steps a) and b) are performed by adding to the starting cheese product a mixture comprising an emulsifying agent and a calcium-chelating agent and sorbic acid or a salt thereof.

2. Process according to Claim 1, in which the ratio of emulsifying and calcium-chelating agent to the sorbic acid or its salts is between 3/1 and 9/1.

3. Process according to Claim 1 or Claim 2, in which the quantity of emulsifying agent is 0.15 to 1.8% by weight relative to the total weight of the mixture obtained in b).

4. Process according to any one of Claims 1 to 3, in which the quantity of sorbic acid or of its salts is from 0.05 to 0.2% by weight relative to the total weight of the mixture obtained in b).

5. Process according to any one of the preceding claims, in which the cheese is divided into pieces, strands or granules before the heat treatment of step a).

6. Process according to Claim 1, in which the cheese pieces or strands have a volume not greater than 125 cm³.

7. Process according to any one of the preceding claims, in which the starting cheese has a dry extract greater than 40% by weight.

8. Process according to any one of the preceding claims, in which step a) is carried out by heat treatment and stirring of the mixture consisting of the starting cheese, the emulsifying agent and the calcium-chelating agent and sorbic acid or a salt thereof, at a temperature of between 30°C and 60°C for a period of between 30 s and 2 min.

9. Process according to any one of the preceding claims, in which step b) is carried out by cooling the mixture obtained at the end of step a) to a temperature of between 25°C and 50°C, for a period of between 1 and 3 min.

10. Process according to Claim 8 or 9, in which steps a) and b) are carried out under a partial vacuum of between 0.4 and 0.7 bar.

11. Process according to any one of the preceding claims, in which a quantity of water not exceeding 30% by weight, preferably not exceeding 10% by weight, relative to the total weight of the mixture obtained, is added to the mixture consisting of the starting cheese, the emulsifying and calcium-chelating agent and the sorbic acid or a salt thereof.

12. Process for the manufacture of a cheese product according to any one of the preceding claims, in which formed food elements are added in step a), b) or c) in a quantity of between 1 and 10% by weight.

13. Process for the manufacture of a cheese product according to one of Claims 1 to 11, in which the cheese paste obtained at the end of the step b), is caused to acquire a degree of overrun, step c) being omitted.

14. Cheese product obtained from a starting material consisting of a cheese obtained from milk according to traditional technologies and optionally formed food elements, and having the organoleptic and textural characteristics which are as close as possible to the starting cheese, and which can be obtained by the process according to any one of Claims 1 to 12.

15. Cheese product according to Claim 14, obtained from a starting material consisting of a cheese obtained from milk according to traditional technologies and optionally formed food elements, and having organoleptic and textural characteristics which are as close as possible to the said starting cheese, and to the said formed food elements, and which can be obtained by the process according to Claim 12.

16. Cheese product obtained from a starting material consisting of a cheese obtained from milk according to traditional technologies, having an overrun texture, and capable of being obtained by the process according to Claim 13.

17. Use of sorbic acid or of a salt thereof for dietary use for enhancing the emulsifying role and the protein network restructuring role of an emulsifying agent and a calcium-chelating agent in a food composition, in particular based on cheese.

18. Use according to Claim 17, in which the emulsifying and calcium-chelating agent is preferably citric acid, phosphoric acid, polyphosphoric acid or one of their salts.

19. Use according to Claim 17 or 18, in which the sorbic acid is used as a mixture with a food structuring agent comprising a mixture of an emulsifying and calcium-chelating agent and sorbic acid or one of its salts, and in which the ratio of the emulsifying and calcium-chelating agent to the sorbic acid or its salt is between 3/1 and 9/1.

## Patentansprüche

1. Verfahren zur Herstellung eines Käseprodukts durch Behandlung einer aus Käse bestehenden Ausgangsmasse, das die Stufen:
a) nach Zerteilung in Stücke, thermische und mechanische Knetbehandlung des Ausgangskäses bei einer Temperatur von unter 60°C, um eine begrenzte Destrukturierung des Proteinnetzwerkes des Ausgangskäses zu erhalten,
b) Abkühlen des Gemischs von Stufe a) auf eine Temperatur von unter 50°C, um die Restrukturierung des Proteinnetzwerkes und die Bildung einer stabilen Emulsion der Fettstoffe mit den anderen Bestandteilen des Ausgangskäses auszulösen,
c) erforderlichenfalls mechanische Behandlung der in b) erhaltenen Masse in einem Apparat mit Endlosschnecke, um die Restrukturierung des Proteinnetzwerkes zu vervollständigen und die Emulsion zu stabilisieren, und
d) Formung der in Stufe c) erhaltenen Masse
umfasst, wobei die Stufen a) und b) durch Zugabe eines Gemischs, das ein emulgierendes und Calcium chelatisierendes Mittel und Sorbinsäure oder ein Salz davon enthält, zum Käseausgangsprodukt durchgeführt werden.

2. Verfahren nach Anspruch 1, in welchem das Verhältnis von emulgierendem und Calcium chelatisierendem Mittel zu Sorbinsäure oder deren Salzen 3/1 bis 9/1 beträgt.

3. Verfahren nach Anspruch 1 oder 2, in welchem die Menge des Emulgiermittels 0,15 bis 1,8 Gew.% des Gesamtgewichts des in b) erhaltenen Gemischs beträgt.

4. Verfahren nach einem der Ansprüche 1 bis 3, in welchem die Menge an Sorbinsäure oder deren Salzen 0,05 bis 0,2 Gew.% des Gesamtgewichts des in b) erhaltenen Gemischs beträgt.

5. Verfahren nach einem der vorhergehenden Ansprüche, in welchem der Käse vor der Wärmebehandlung in Stufe a) in Stücke, Stränge oder Grieß zerteilt wird.

6. Verfahren nach Anspruch 1, in welchem die Käsestücke oder -stränge ein Volumen von höchstens 125 cm³ besitzen.

7. Verfahren nach einem der vorhergehenden Ansprüche, in welchem der Ausgangskäse eine Trockenmasse von über 40 Gew.% besitzt.

8. Verfahren nach einem der vorhergehenden Ansprüche, in welchem die Stufe a) durch 30 s bis 2 min langes Wärmebehandeln und Umrühren des Gemischs, das aus dem Ausgangskäse, dem emulgierenden und Calcium chelatisierenden Mittel und der Sorbinsäure oder einem Salz davon besteht, bei einer Temperatur von 30 bis 60°C durchgeführt wird.

9. Verfahren nach einem der vorhergehenden Ansprüche, in welchem die Stufe b) durch 1 bis 3 min langes Abkühlen des in Stufe a) erhaltenen Gemischs auf eine Temperatur von 25 bis 50°C durchgeführt wird.

10. Verfahren nach Anspruch 8 oder 9, in welchem die Stufen a) und b) in einem Grobvakuum von 0,4 bis 0,7 bar durchgeführt werden.

11. Verfahren nach einem der vorhergehenden Ansprüche, in welchem zu dem Gemisch, das aus dem Ausgangskäse, dem emulgierenden und Calcium chelatisierenden Mittel und der Sorbinsäure oder einem Salz davon besteht, eine Wassermenge zugegeben wird, die 30 Gew.% und vorzugsweise 10 Gew.% des Gesamtgewichts des erhaltenen Gemischs nicht übersteigt.

12. Verfahren zur Herstellung eines Käseprodukts nach einem der vorhergehenden Ansprüche, in welchem in Stufe a), b) oder c) stückige Zutaten in einer Menge von 1 bis 10 Gew.% zugegeben werden.

13. Verfahren zur Herstellung eines Käseprodukts nach einem der Ansprüche 1 bis 11, in welchem ein Blähen der in Stufe b) erhaltenen Käsemasse durchgeführt und Stufe c) weggelassen wird.

14. Käseerzeugnis, das aus einer Ausgangsmasse, die aus einem Käse besteht, der.gemäß herkömmlicher Verfahren aus Milch gewonnen worden ist, und wahlweise stückigen Zutaten erhalten ist, organoleptische und Textureigenschaften besitzt, die dem Ausgangskäse so nahe wie möglich kommen, und durch das Verfahren nach einem der Ansprüche 1 bis 12 hergestellt werden kann.

15. Käseerzeugnis nach Anspruch 14, das aus einer Ausgangsmasse, die aus einem Käse besteht, der gemäß herkömmlicher Verfahren aus Milch gewonnen worden ist, und stückigen Zutaten erhalten ist, organoleptische und Textureigenschaften besitzt, die dem Ausgangskäse und den stückigen Zutaten so nah wie möglich kommen, und durch das Verfahren nach Anspruch 12 hergestellt werden kann.

16. Käseerzeugnis, das aus einer Ausgangsmasse, die aus einem Käse besteht, der gemäß herkömmlicher Verfahren aus Milch gewonnen worden ist, erhalten ist, eine aufgeblähte Textur besitzt und durch das Verfahren nach Anspruch 13 hergestellt werden kann.

17. Verwendung von Sorbinsäure oder einem lebensmitteltauglichen Salz davon zur Verstärkung der emulgierenden und das Proteinnetzwerk wiederherstellenden Funktion eines emulgierenden und Calcium chelatisierenden Mittels in einer Lebensmittelzusammensetzung, die insbesondere einen Käse zur Grundlage hat.

18. Verwendung nach Anspruch 17, bei welcher das emulgierende und Calcium chelatisierende Mittel vorzugsweise Citronen-, Phosphor- und Polyphosphorsäure oder eines ihrer Salze ist.

19. Verwendung nach Anspruch 17 oder 18, bei welcher die Sorbinsäure gemischt mit einer strukturbildenden Zutat eingesetzt wird, die ein Gemisch aus einem emulgierenden und Calcium chelatisierenden Mittel und Sorbinsäure oder einem ihrer Salze umfasst, und das Verhältnis von emulgierendem und Calcium chelatisierendem Mittel zu Sorbinsäure oder deren Salz 3/1 bis 9/1 beträgt.
